# DEMANDE DE BREVET EUROPEEN

(11) **EP 3 514 393 A2**
(43) Date de publication de la demande: **24.07.2019**
(21) Numéro de dépôt: 19152963.5
(22) Date de dépôt: 22.01.2019
(51) Int. Cl.: F04D 25/08, F04D 25/16, F04D 29/58, F04B 25/00, F04C 23/00, F04C 29/04, F04B 41/06, F04B 53/08, F16K 11/085

(54) **DISPOSITIF DE RECUPERATION D'ENERGIE THERMIQUE**

(30) Priorité: 23.01.2018 FR 1850501
(71) Demandeur: Airflux, 59000 Lille (FR)
(72) Inventeur: BOUTRY, Serge, 7700 MOUSCRON (BE)
(74) Mandataire: Bureau Duthoit Legros Associés

(57) **Abrégé**

L'invention est relative à un dispositif de récupération thermique destiné à être relié à un compresseur d'air non lubrifié assurant la compression mécanique de l'air, convenant pour la récupération des calories générées par la compression de l'air.

Lesdits moyens pour la récupération des calories contenues dans l'air comprimé chaud d'inter-étage comprennent :
- un système d'échangeur air/fluide (6), comprenant un primaire destiné à être traversé par l'air comprimé chaud d'inter-étage (Act) présentant une entrée (61) de primaire et une sortie (62) de primaire, et un secondaire destiné à être traversé par un fluide tel que de qu'un liquide, en particulier de l'eau, de la vapeur, ou encore un gaz
- une vanne (7) progressive, trois voies à section de passage constante, y compris une entrée de vanne (70) et deux sorties de vanne (71,72), ladite entrée de vanne (70) étant destinée à être connectée à la sortie du premier étage de compression (2) recevant l'air chaud comprimé d'inter-étage (Act).

## Description

L'invention est relative à un dispositif de récupération d'énergie thermique destiné à être relié à un compresseur d'air assurant la compression mécanique de l'air (non lubrifié), convenant pour la récupération des calories générées par la compression de l'air, et en particulier les calories de l'air chaud de l'inter-étage de compression et/ou de l'air chaud du second étage de compression.

L'invention concerne encore un compresseur d'air équipé d'un tel dispositif de récupération d'énergie thermique, ainsi qu'un procédé d'obtention d'un compresseur d'air selon l'invention par ajout d'un dispositif de récupération thermique selon l'invention à un compresseur d'air existant, typiquement conforme à l'état de la technique.

Le domaine de l'invention est celui des compresseurs d'air connus par l'homme du métier sous l'appellation *« non lubrifié* » ou encore « *sans huile* », à savoir que la compression mécanique de l'air est générée par des organes de compression non-lubrifiés, l'air ainsi produit étant exempt d'huile. Dans ce type de compresseur, l'éventuelle récupération de calories ne peut pas être réalisée sur le lubrifiant.

L'état de la technique des compresseurs d'air connaît en effet deux grandes familles de compresseur, avec :
- une première famille regroupant les compresseurs à injection d'huile pour lesquels l'air compressé est en mélange avec de l'huile dans le circuit de compression, et
- une deuxième famille regroupant les compresseurs fonctionnant sans lubrification *(« Oil free* ») pour lesquels deux étages de compression mécanique en série travaillent sur l'air exempt d'huile.

La récupération de chaleur sur les compresseurs de la première famille est connue et repose sur un ou plusieurs échangeurs thermiques huile/eau : la demande EP2405223 (A1) de la présente Demanderesse en est un exemple.

L'invention s'intéresse toutefois ici aux compresseurs de la deuxième famille, à savoir non lubrifiés : le circuit de compression d'air d'un compresseur (sans huile) comprend, de manière classique :
- un premier étage de compression mécanique configuré pour comprimer un air typiquement à pression atmosphérique, produisant un air comprimé chaud d'inter-étage,
- un premier système de refroidissement convenant pour refroidir l'air comprimé chaud d'inter-étage, produisant un air comprimé froid d'inter-étage,
- un deuxième étage de compression mécanique configuré pour comprimer l'air froid de l'inter-étage, produisant un air comprimé chaud du deuxième étage,
- un deuxième système de refroidissement convenant pour refroidir l'air comprimé chaud du deuxième étage, produisant un air comprimé froid du deuxième étage.

Les systèmes de refroidissement sont typiquement des aérothermes (des échangeurs thermiques air/air dissipant la chaleur dans l'atmosphère, et sans valorisation), ou encore des échangeurs thermiques air/eau.

L'état de la technique connaît la récupération de chaleur après le second étage de compression en ce qu'elle ne pose pas de problème technique majeur. Dans ce cas, l'essentiel de la chaleur contenue dans l'air compressé à l'inter-étage est dissipée au premier dispositif de refroidissement, et est donc perdue.

En revanche, récupérer les calories contenues dans l'air comprimé chaud de l'inter-étage est plus complexe car toutes modifications significatives des caractéristiques de l'air comprimé arrivant au second étage pourraient perturber le fonctionnement du compresseur, voire l'endommager.

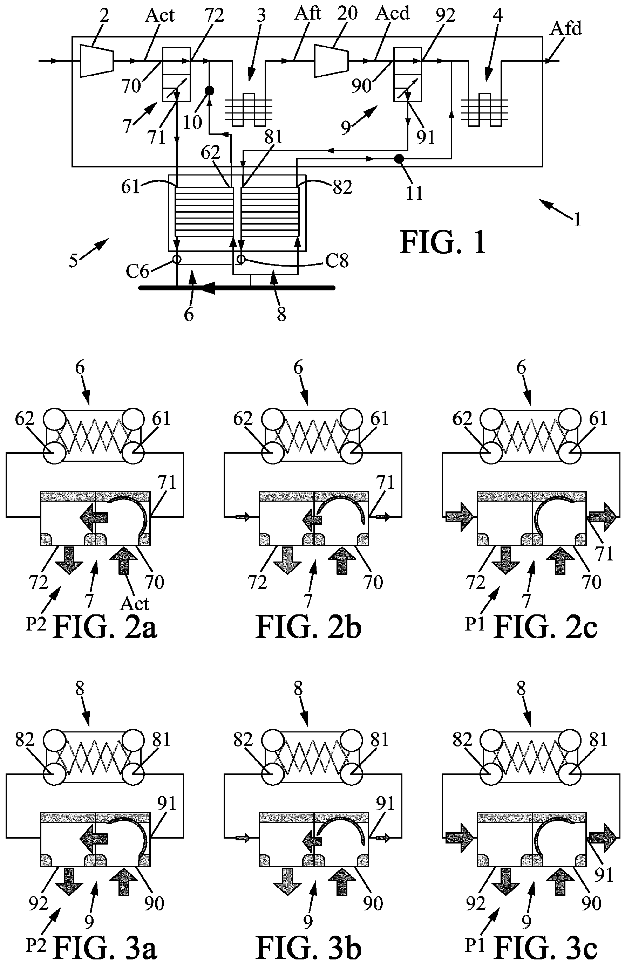

La récupération thermique des calories de l'air comprimé du second étage est par exemple connue du document CN 202520561. Le compresseur d'air (non lubrifié) du document CN 202520561 (voir figure 1) comprend un échangeur huile/eau repéré 203, et deux échangeurs air/eau repérés 206 et 207.

De plus, le récupérateur comprend un premier échangeur de chaleur repéré 210 et un second échangeur de chaleur repéré 208. Ce second échangeur est un échangeur eau/eau, le secondaire de l'échangeur servant à chauffer l'eau d'un réservoir 209.

Un capteur de température 213 détecte la température de l'eau du circuit de refroidissement avant son recyclage à l'échangeur huile/eau. L'eau du circuit circule en série au travers des trois refroidisseurs repérés 203, 206, 207 avant d'être refroidie par le premier échangeur 210 et le second échangeur 209, constituant ainsi une boucle de refroidissement d'eau.

Le signal du capteur 213 est utilisé pour piloter une valve propositionnelle trois voies repérée 211, permettant de faire circuler l'eau au premier échangeur ou au second échangeur, et selon une régulation assurant que la température soit toujours inférieure à une valeur déterminée.

Une telle technologie opérant la récupération de chaleur par l'intermédiaire d'une boucle de refroidissement par eau présente pour défaut majeur des niveaux de températures de l'eau chauffée globalement insuffisants restreignant les applications escomptées (tels que chauffage sanitaire, eau de process, réseau de chauffage...).

L'invention s'intéresse ainsi à la récupération de chaleur du second étage, et/ou surtout des calories de l'air comprimé de l'inter-étage directement sur l'air, à savoir par échangeur air/fluide dont le secondaire chauffe directement le fluide d'intérêt (par exemple de l'eau ou de l'air) par l'intermédiaire d'une paroi, par exemple l'eau de procédé, l'eau du réseau de chauffage ou encore l'eau chaude sanitaire, et non par l'intermédiaire d'une boucle d'eau comme dans cette antériorité CN 202520561.

Selon les constatations des inventeurs, une telle récupération directe pose des difficultés techniques importantes en ce qu'elle doit répondre à plusieurs contraintes :
- la température importante de l'air après compression, typiquement comprise entre 180°C et 210 °C qui est susceptible de créer des chocs thermiques avec fissuration de l'échangeur air/fluide de température lorsque l'écart de température est trop important entre le fluide chaud (air) circulant dans le primaire (par exemple compris entre 180°C et 210°C) et le fluide (tel que l'eau) circulant dans le secondaire (qui peut être à température ambiante, par exemple 15°C)
- les pertes de charge, en particulier à l'inter-étage en ce que l'air comprimé refroidi d'inter-étage doit présenter des caractéristiques (de pression et de température) déterminées en vue d'être compressé par le deuxième étage de compression mécanique,
- le refroidissement de l'air engendre de la condensation d'eau, néfaste aux organes de compression mécanique.

L'état de la technique connaît toutefois du document CN 203685588 la récupération de chaleur d'un compresseur d'air (non lubrifié) permettant une récupération directe de la chaleur de l'air comprimé de l'inter-étage et de la chaleur de l'air comprimé du second étage.

Il s'agit d'un compresseur non lubrifié avec un premier étage de compression repéré A et un deuxième étage de compression repéré B. Un échangeur repéré 10 permet de refroidir l'air comprimé du premier étage avant qu'il n'alimente le deuxième étage A. Un échangeur repéré 20 permet de refroidir l'air comprimé du second étage, suivi d'un échangeur 30.

Les échangeurs 10, 20, 30 sont des échangeurs air/eau, l'eau servant au refroidissement et à la récupération passant successivement devant les échangeurs 30, 10, et 20, trois valves de régulation repérées 35, 15, 24 permettant respectivement de réguler le débit d'eau au niveau de chacun des échangeurs.

Le pilotage des trois valves est opéré par un dispositif de contrôle de la température repéré 40 qui est connecté au capteur 25 ciblant la température de l'eau en sortie, ainsi qu'aux capteurs 13 et 33 ciblant la température de l'air juste en aval du deuxième étage, et à la sortie du compresseur.

Selon les constatations de l'inventeur, le système de récupération du document CN 203685588 est un système natif au compresseur d'air qui vient en remplacement des systèmes de refroidisseurs classique d'un compresseur à air non lubrifié (sans récupération de chaleur).

Selon les constatations de l'inventeur, un défaut important d'un tel compresseur est qu'il oblige à pratiquer la récupération de chaleur pour autoriser le fonctionnement du compresseur. Le compresseur d'air devient inutilisable en cas d'entretien de la boucle d'eau chaude de récupération.

Un autre défaut de la conception d'un tel compresseur avec récupération thermique est l'emploi d'un nombre d'électrovalves important (et autre vannes) pour assurer la régulation du système de récupération thermique, et surtout le refroidissement de l'air comprimé à l'inter-étage et au second étage pour assurer le fonctionnement normal et pérenne du compresseur. Ainsi le blocage d'une seule de ces électrovalves entrainera non seulement un défaut de récupération thermique du système de récupération, mais constitue un risque très important et immédiat pour le compresseur d'air lui-même, qui, si l'air est mal refroidi, sera détérioré.

L'état de la technique connait encore le document CN104005959A qui traite de la récupération d'énergie sur un compresseur non lubrifié. On reconnait à la figure du document CN104005959A le premier étage de compression mécanique repéré 2 et le deuxième étage de compression mécanique repéré 3.

On reconnait encore (à droite) le système de refroidissement classique d'un compresseur (avec aérotherme 10). Le premier étage et le second étage de compression mécanique sont repérés 2, et 3, la partie « classique de refroidissement» est à droite (voir notamment « inter-cooler 8 », « after-cooler 9 » et « aérateur 10 »).

Le système de récupération de chaleur est illustré à droite de la figure et vient s'ajouter au compresseur avec son système de refroidissement et comprend les échangeurs air/eau repérés 4 et 5.

En fonctionnement, le système de récupération peut « *remplacer* » la partie de refroidissement classique. Le système de récupération est utilisé à lui seul pour refroidir l'air comprimé de l'inter-étage et après le second étage. A cet effet, un automate programmable (PLC) repéré 39 pilote un ensemble de valve trois voies, et présente pour entrées les signaux de divers capteurs de température.

En revanche, et en cas de défaut du système de récupération, le PLC commande un ensemble de valves pour que le système de récupération se mette automatiquement en défaut (le refroidissement étant alors obtenu par les éléments de refroidissement classiques du refroidisseur, repérés 8, 9 et 10). Lorsque la demande thermique en récupération est faible, la partie de récupération classique (8, 9, 10) peut fonctionner de concert avec le système de récupération thermique (4, 5).

Selon les constatations de l'inventeur, un défaut de la conception d'un tel compresseur avec récupération thermique est l'emploi d'un grand nombre d'électrovalves (i.e. au nombre de neuf) et autre vannes pour assurer la régulation du système de récupération thermique, et surtout le refroidissement de l'air comprimé à l'inter-étage et au second étage et de manière à assurer le fonctionnement normal et pérenne du compresseur d'air.

Plus encore un défaut majeur de cette conception est que le blocage d'une seule de ces électrovalves entrainera non seulement un défaut du système de récupération, mais constitue un risque très important et immédiat pour le compresseur d'air lui-même, qui, si l'air comprimé est mal refroidi, sera détérioré rapidement en raison des températures élevées (180°C à 210°C) de l'air comprimé de l'inter-étage.

L'état de la technique connaît encore du document JP2017150496 un compresseur à air à deux étages de compression, repérés 2 et 4, avec présence de refroidisseurs repérés 4 et 5 respectivement à l'inter-étage et au second étage. JP2017150496 divulgue encore la présence d'un dispositif de récupération thermique qui comprend un premier échangeur air/eau pour la récupération des calories d'inter-étage et un second échangeur pour les calories du second étage. Le problème identifié dans cette antériorité est celui de la détérioration des échangeurs d'inter-étage et du second étage lorsqu'aucun débit d'eau ne circule dans le circuit secondaire des échangeurs. JP 2017150496 solutionne ce problème :
- à l'inter-étage en prévoyant deux vannes d'arrêt : lorsqu'aucun débit d'eau ne circule dans le secondaire de l'échangeur, les deux vannes d'arrêt sont pilotées pour que l'air chaud issu de la compression du premier étage soit refroidi directement au refroidisseur, sans passer par l'échangeur d'inter-étage : la vanne repérée 14 est pilotée de sa position fermée vers sa position totalement ouverture, puis quelques instants après, la vanne 16 est pilotée de sa position totalement ouverture vers sa position fermée,
- au second étage, en prévoyant deux vannes d'arrêt repérées 15, 17 : lorsqu'aucun débit d'eau ne circule au secondaire de l'échangeur 7, les deux vannes d'arrêt sont pilotées pour que l'air chaud court-circuite l'échangeur 7 et soit refroidi directement au refroidisseur 5 : la vanne 15 est pilotée de sa position fermée vers sa position totalement ouverte, puis quelques instants après la vanne 17 est pilotée de sa position totalement ouverte vers sa position fermée.

A l'inverse et lorsque la vanne est ouverte, et que de l'eau circule aux secondaires des échangeurs 6, et 7 pour la récupération des calories de l'air chaud d'inter-étage et du second étage, les vannes d'arrêts 16, et 17 sont passées brutalement (en mode tout ou rien) de leur position d'ouverture vers leur position de fermeture, et successivement, quelques secondes après, les vannes d'arrêts 14 et 15 sont fermées.

Selon les constatations des inventeurs l'ouverture brutale (non progressive) des vannes 16 et 17 de JP2017150496 (seule fonctionnement possible dans cette antériorité), engendre des chocs thermiques aux échangeurs 6, et 7 ; la chauffe brutale (la température d'air habituellement observée dans ce procédé avoisine les 200°C) du métal des échangeurs et la dissipation rapide de cette énergie par le flux d'eau va justement provoquer de violents chocs thermiques, qui répétés entraîneront inévitablement la casse du matériel et la fuite, tant de l'air sous pression que de l'eau, voire même de l'un dans l'autre. JP 2017150496 reste muet quant à l'identification même de ce problème des chocs thermiques qui, lorsque répétés finiront pas fissurer l'échangeur.

Un autre défaut de JP 2017150496, non identifié par cette antériorité, est celui de l'intégrité même du compresseur en cas de défaut de mobilité des vannes. Rien n'empêche de manière irrémédiable que les deux vannes repérés 14 et 16 à l'inter étage restent bloquées à la fermeture (par exemple en cas d'un défaut de vanne ou défaut de pilotage des vannes), ce qui engendrera la casse du compresseur, et plus particulièrement du deuxième étage de compression.

Le but de la présente invention est de proposer un dispositif de récupération d'énergie thermique destiné à être relié à un compresseur d'air assurant la compression mécanique de l'air, non lubrifié, convenant pour la récupération directe (i.e. non par l'intermédiaire d'une boucle d'eau comme dans l'antériorité CN 202520561) des calories de l'air chaud compressé vers un fluide tel que l'eau de process, l'eau sanitaire ou l'eau de chauffage, de la vapeur, de l'huile, ou encore un gaz tel que l'air permettant d'atteindre des températures satisfaisantes et de conception simplifiée par rapport à celui de l'antériorité CN104005959A.

Un autre but de la présente invention est de proposer un équipement fiable, de durée de vie accrue par rapport à celui connu du document JP 201715049 par une meilleure protection des échangeurs vis-à-vis des chocs thermiques et ce, sans aucun risque pour le compresseur d'air.

Un autre but de la présente invention est de proposer un compresseur d'air équipé d'un tel dispositif de récupération d'énergie thermique, de sécurité accrue notamment vis-à-vis de celui du document JP 201715049 , protégeant le compresseur d'air en assurant tout de même son refroidissement de sécurité, même en cas de blocage d'une des vannes utilisées pour la régulation, voire même en cas de dysfonctionnement de son électronique de régulation.

D'autres buts et avantages apparaitront au cours de la description qui va suivre qui n'est donnée qu'à titre indicatif et qui n'a pas pour but de la limiter.

L'invention est relative à un dispositif de récupération thermique destiné à être relié à un compresseur d'air non lubrifié assurant la compression mécanique de l'air, convenant pour la récupération des calories générées par la compression de l'air, ledit compresseur d'air comprenant :
- un premier étage de compression mécanique configuré pour comprimer un air, produisant un air comprimé chaud d'inter-étage,
- un premier système de refroidissement convenant pour refroidir l'air comprimé chaud d'inter-étage, produisant un air comprimé froid d'inter-étage,
- un deuxième étage de compression mécanique configuré pour comprimer l'air froid de l'inter-étage, produisant un air comprimé chaud du deuxième étage
- un deuxième système de refroidissement convenant pour refroidir l'air comprimé chaud du deuxième étage, produisant un air comprimé froid du deuxième étage, ledit dispositif de récupération thermique comprenant des moyens pour la récupération des calories contenues dans l'air comprimé chaud d'inter-étage et/ou des moyens pour la récupération des calories contenues dans l'air comprimé chaud du deuxième étage,
lesdits moyens pour la récupération des calories contenues dans l'air comprimé chaud d'inter-étage comprenant :
- un système d'échangeur air/fluide, comprenant un primaire destiné à être traversé par l'air comprimé chaud d'inter-étage présentant une entrée de primaire et une sortie de primaire, et un secondaire destiné à être traversé par un fluide tel qu'un liquide tel que de l'eau, de la vapeur, ou encore un gaz,
- une vanne progressive, trois voies à section de passage constante, y compris une entrée de vanne et deux sorties de vanne, ladite entrée de vanne étant destinée à être connectée à la sortie du premier étage de compression recevant l'air chaud comprimé d'inter-étage,
   et dans lequel ladite première sortie de vanne est connectée à l'entrée du primaire dudit système d'échangeur air/fluide, ladite sortie du primaire étant destinée à être connectée à l'entrée du premier système de refroidissement, et la seconde sortie de vanne étant destinée à être connectée à l'entrée du premier système de refroidissement,
   et dans lequel la vanne progressive pouvant passer d'une première position, d'une part, pour laquelle l'air en entrée de vanne est destiné à être acheminé totalement vers la première sortie de vanne vers une deuxième position, d'autre part, pour laquelle l'air en entrée de vanne est destiné à être acheminé totalement vers la deuxième sortie de vanne, et dans lequel la vanne progressive est à section de passage constante quel que soit l'état intermédiaire de la vanne progressive entre ladite première position et ladite seconde position,
lesdits moyens pour la récupération des calories contenues dans l'air comprimé chaud du second étage comprenant:
- un système d'échangeur air/fluide, comprenant un primaire destiné à être traversé par l'air comprimé du deuxième étage présentant une entrée de primaire et une sortie de primaire, et un secondaire destiné à être traversé par un fluide tel qu'un liquide, de la vapeur, ou un gaz,
- une vanne progressive, trois voies à section de passage constante, y compris une entrée de vanne et deux sorties de vanne, ladite entrée de vanne étant destinée être connectée à la sortie du deuxième étage de compression recevant l'air chaud comprimé du second étage,
   et dans lequel ladite première sortie de vanne est connectée à l'entrée du primaire dudit système d'échangeur air/fluide, ladite sortie du primaire étant destinée être connectée à l'entrée du deuxième système de refroidissement, et la seconde sortie de vanne étant destinée à être connectée à l'entrée du deuxième système de refroidissement
   et dans lequel la vanne progressive pouvant passer d'une première position, d'une part, pour laquelle l'air en entrée de vanne est acheminé totalement vers la premier sortie de vanne, vers une deuxième position, d'autre part, pour laquelle l'air en entrée de vanne est acheminé totalement vers la deuxième sortie de vanne, et dans lequel la vanne est à section de passage constante quel que soit l'état intermédiaire de la vanne progressive entre ladite première position et ladite deuxième position.

Selon des caractéristiques optionnelles du dispositif, prises seules ou en combinaison :
- les moyens pour la récupération des calories contenues dans l'air comprimé chaud d'inter-étage comprennent un capteur de température ciblant la température du fluide ayant traversé le secondaire du système d'échangeur air/fluide, et une électronique de commande et de régulation configurée pour la mise en oeuvre d'une régulation proportionnelle, connectée au capteur de température et configurée de manière à délivrer un signal de commande proportionnelle de la vanne progressive entre la première position et la deuxième position en fonction du signal de température du capteur de température ; l'électronique de commande peut être configurée pour mettre en oeuvre une régulation PID au cours de laquelle la vanne progressive est régulée progressivement, la régulation étant configurée pour obtenir une montée progressive en température du système d'échangeur air/fluide (d'inter-étage); la régulation est par exemple configurée pour imposer une vitesse d'augmentation de la température ciblée par le capteur de température inférieure à 30°C par minute, et de préférence inférieure à 10°C par minute lorsque la vanne est régulée de la deuxième position vers la première position ;

- lesdits moyens pour la récupération des calories contenues dans l'air comprimé chaud du second étage comprennent un capteur de température ciblant la température du fluide ayant traversé le secondaire du système d'échangeur air/fluide, et une électronique de commande et de régulation, configurée pour la mise en oeuvre d'une régulation proportionnelle, connectée au capteur de température et configurée de manière à délivrer un signal de commande proportionnelle de la vanne progressive entre la première position et la deuxième position en fonction du signal de température du capteur de température ; l'électronique de commande peur être configurée pour mettre en oeuvre une régulation PID au cours de laquelle la vanne progressive est régulée progressivement, la régulation étant configurée pour obtenir une montée progressive en température du système d'échangeur air/fluide (du second étage); la régulation est par exemple configurée pour imposer une vitesse d'augmentation de la température ciblée par le capteur de température inférieure à 30°C par minute, et de préférence inférieure à 10°C par minute lorsque la vanne est régulée de la deuxième position vers la première position ;
- la vanne progressive comprend un corps de vanne avec une tubulure interne qui définit :
   - la première sortie de la vanne reliée au système d'échangeur,
   - la deuxième sortie de vanne destinée à être reliée au système de refroidissement, en court-circuitant le système d'échangeur,
   - un obturateur mobile comprenant un corps creux tubulaire, monté pivotant dans le corps de vanne, formant l'entrée de la vanne, le fluide en entrée circulant dans le creux de l'obturateur avant de sortir par une ouverture de paroi de l'obturateur mobile dans la tubulure du corps de vanne,
   la vanne étant configurée de sorte que le pivotement de l'obturateur suivant deux positions extrêmes permet d'atteindre respectivement la première position P1 et la deuxième position P2 de vanne.

L'invention concerne encore un compresseur d'air assurant la compression mécanique de l'air sans huile, comprenant :
- un premier étage de compression mécanique configuré pour comprimer un air, produisant un air comprimé chaud d'inter-étage,
- un premier système de refroidissement convenant pour refroidir l'air comprimé chaud d'inter-étage, produisant un air comprimé froid d'inter-étage,
- un deuxième étage de compression mécanique configuré pour comprimer l'air froid de l'inter-étage, produisant un air comprimé chaud du deuxième étage,
- un deuxième système de refroidissement convenant pour refroidir l'air comprimé chaud du deuxième étage, produisant un air comprimé froid du deuxième étage.

Selon l'invention, ledit compresseur d'air comprend ledit dispositif de récupération d'énergie thermique conforme à l'invention, convenant pour la récupération de calories contenues dans l'air comprimé chaud d'inter-étage et/ou des calories contenues dans l'air comprimé chaud du deuxième étage,
lesdits moyens pour la récupération des calories contenues dans l'air comprimé chaud d'inter-étage comprenant :
- le système d'échangeur air/liquide, comprenant le primaire destiné à être traversé par l'air comprimé chaud d'inter-étage présentant ladite entrée de primaire et la sortie de primaire, et le secondaire destiné à être traversé par un fluide tel que de l'eau, de la vapeur ou un encore un gaz
- la vanne progressive, trois voies à section de passage constante, y compris ladite entrée de vanne et les deux sorties de vanne, ladite entrée de vanne étant connectée à la sortie du premier étage de compression recevant l'air chaud comprimé d'inter-étage,
et dans lequel ladite première sortie de vanne est connectée à l'entrée du primaire dudit système d'échangeur air/fluide, ladite sortie du primaire étant connectée à l'entrée du premier système de refroidissement, et la seconde sortie de vanne étant connectée à l'entrée du premier système de refroidissement
et dans lequel la vanne progressive pouvant passer de la première position, d'une part, pour laquelle l'air en entrée de vanne est acheminé totalement vers la première sortie de vanne de sorte que l'air soit acheminé au primaire du système d'échangeur air/fluide avant de traverser le premier système de refroidissement, vers la deuxième position, d'autre part, pour laquelle l'air en entrée de vanne est acheminé totalement vers la deuxième sortie de vanne de sorte que l'air soit acheminé au primaire du premier système de refroidissement sans traverser le système d'échangeur air/fluide,
lesdits moyens pour la récupération des calories contenues dans l'air comprimé chaud du second étage comprenant :
- le système d'échangeur air/fluide, comprenant le primaire destiné à être traversé par l'air comprimé du deuxième étage comprenant ladite entrée de primaire et la sortie de primaire, et le secondaire destiné à être traversé par un fluide tel que de l'eau,
- la vanne progressive, trois voies à section de passage constante, y compris une entrée de vanne et deux sorties de vanne, ladite entrée de vanne étant connectée à la sortie du deuxième étage de compression recevant l'air chaud comprimé du second étage,
   et dans lequel ladite première sortie de vanne est connectée à l'entrée du primaire dudit système d'échangeur air/fluide, ladite sortie du primaire étant connectée à l'entrée du deuxième système de refroidissement, et la seconde sortie de vanne étant connectée à l'entrée du deuxième système de refroidissement
   et dans lequel la vanne progressive pouvant passer la première position, d'une part, pour laquelle l'air en entrée de vanne est acheminé totalement vers la première sortie de vanne de sorte que l'air soit acheminé au système d'échangeur air/fluide avant de traverser le deuxième système de refroidissement, vers la deuxième position, d'autre part, pour laquelle l'air en entrée de vanne est acheminé totalement vers la deuxième sortie de vanne de sorte que l'air soit acheminé au deuxième système de refroidissement sans traverser le système d'échangeur air/fluide, et dans lequel la vanne est à section de passage constante quel que soit l'état intermédiaire de la vanne progressive entre ladite première position et ladite deuxième position.

Selon des caractéristiques optionnelles du compresseur, prises seules ou en combinaison :
- ledit compresseur d'air comprend (uniquement) lesdits moyens pour la récupération des calories contenues dans l'air comprimé chaud d'inter-étage ou alternativement, lesdits moyens pour la récupération des calories contenues dans l'air comprimé chaud du second étage :
- le compresseur comprend (non seulement) lesdits moyens pour la récupération des calories contenues dans l'air comprimé chaud d'inter-étage et lesdits moyens pour la récupération des calories contenues dans l'air comprimé chaud du second étage : dans ce cas le secondaire du système d'échangeur air/fluide des moyens pour la récupération des calories contenues dans l'air comprimé chaud d'inter-étage et le secondaire du système d'échangeur air/fluide des moyens pour la récupération des calories contenues dans l'air comprimé chaud du second étage peuvent être traversés par un même fluide à chauffer.

L'invention concerne encore un procédé d'obtention d'un compresseur conforme à l'invention à partir d'un compresseur existant dépourvu de dispositif de récupération thermique de calories contenues dans l'air comprimé chaud d'inter-étage et/ou des calories contenues dans l'air comprimé chaud du deuxième étage, ledit compresseur existant comprenant :
- un premier étage de compression mécanique configuré pour comprimer un air, produisant un air comprimé chaud d'inter-étage,
- un premier système de refroidissement convenant pour refroidir l'air comprimé chaud d'inter-étage, produisant un air comprimé froid d'inter-étage,
- un deuxième étage de compression mécanique configuré pour comprimer l'air froid de l'inter-étage, produisant un air comprimé chaud du deuxième étage
- un deuxième système de refroidissement convenant pour refroidir l'air comprimé chaud du deuxième étage, produisant un air comprimé froid du deuxième étage.

Selon le procédé conforme à l'invention, on ajoute au compresseur existant un dispositif de récupération thermique de calories contenues dans l'air comprimé chaud d'inter-étage et/ou des calories contenues dans l'air comprimé chaud du deuxième étage conforme à l'invention, par le montage desdits moyens pour la récupération des calories contenues dans l'air comprimé chaud d'inter-étage et/ou des moyens pour la récupération des calories contenues dans l'air comprimé chaud du second étage lesdits moyens pour la récupération des calories contenues dans l'air comprimé chaud d'inter-étage, comprenant :
- le système d'échangeur air/fluide, comprenant le primaire destiné à être traversé par l'air comprimé chaud d'inter-étage présentant ladite entrée de primaire et une sortie de primaire, et le secondaire destiné à être traversé par un fluide tel que de l'eau,
- la vanne progressive, trois voies à section de passage constante, y compris une entrée de vanne et deux sorties de vanne, ladite première sortie de vanne étant connectée à l'entrée du primaire dudit système d'échangeur air/fluide,
et procédé dans lequel :
- on connecte ladite entrée de vanne à la sortie du premier étage de compression recevant l'air chaud comprimé d'inter-étage,
- on connecte ladite sortie du primaire à l'entrée du premier système de refroidissement, la seconde sortie de vanne étant connectée à l'entrée du premier système de refroidissement,
et dans lequel lesdits moyens pour la récupération des calories contenues dans l'air comprimé chaud du second étage comprenant :
- le système d'échangeur air/fluide, comprenant le primaire destiné à être traversé par l'air comprimé du deuxième étage présentant ladite entrée de primaire et ladite sortie de primaire, et le secondaire destiné à être traversé par un fluide tel que de l'eau,
- ladite vanne progressive, trois voies à section de passage constante, y compris une entrée de vanne et deux sorties de vanne, ladite première sortie de vanne étant connectée à l'entrée du primaire dudit système d'échangeur air/fluide
et procédé dans lequel :
- on connecte ladite entrée de vanne à la sortie du deuxième étage de compression recevant l'air chaud comprimé du second étage,
- on connecte ladite sortie du primaire à l'entrée du deuxième système de refroidissement, et la seconde sortie de vanne étant connectée à l'entrée du deuxième système de refroidissement.

L'invention sera mieux comprise à la lecture de la description suivante accompagnée des dessins en annexe parmi lesquels :
- La figure 1 est une vue schématique d'un compresseur d'air, appartenant à la famille des compresseurs non lubrifiés comprenant un premier étage de compression mécanique, un deuxième étage de compression mécanique, un premier système de refroidissement convenant pour refroidir l'air comprimé chaud d'inter-étage, un deuxième système de refroidissement convenant pour refroidir l'air comprimé chaud du deuxième étage ainsi qu'un dispositif de récupération d'énergie thermique conforme à l'invention selon un mode de réalisation de l'invention, présentant des moyens pour la récupération des calories contenues dans l'air comprimé chaud d'inter-étage et des moyens pour la récupération des calories contenues dans l'air comprimé chaud du second étage,
- Les figures 2a, 2b et 2c sont des vues illustrant la vanne progressive et le système d'échangeur air/fluide des moyens pour la récupération des calories contenues dans l'air comprimé chaud d'inter-étage, dans trois positions de régulation de la vanne, à savoir pour les figures 2c, 2a, respectivement ladite première position et ladite deuxième positon, et pour la figure 2b une position intermédiaire de la vanne,
- Les figures 3a, 3b et 3c sont des vues illustrant la vanne progressive et le système d'échangeur air/fluide des moyens pour la récupération des calories contenues dans l'air comprimé chaud du second étage, dans trois positions de régulation de la vanne, à savoir pour les figures 3c, 3a, respectivement ladite première position et ladite deuxième positon, et pour la figure 3b une position intermédiaire de la vanne,

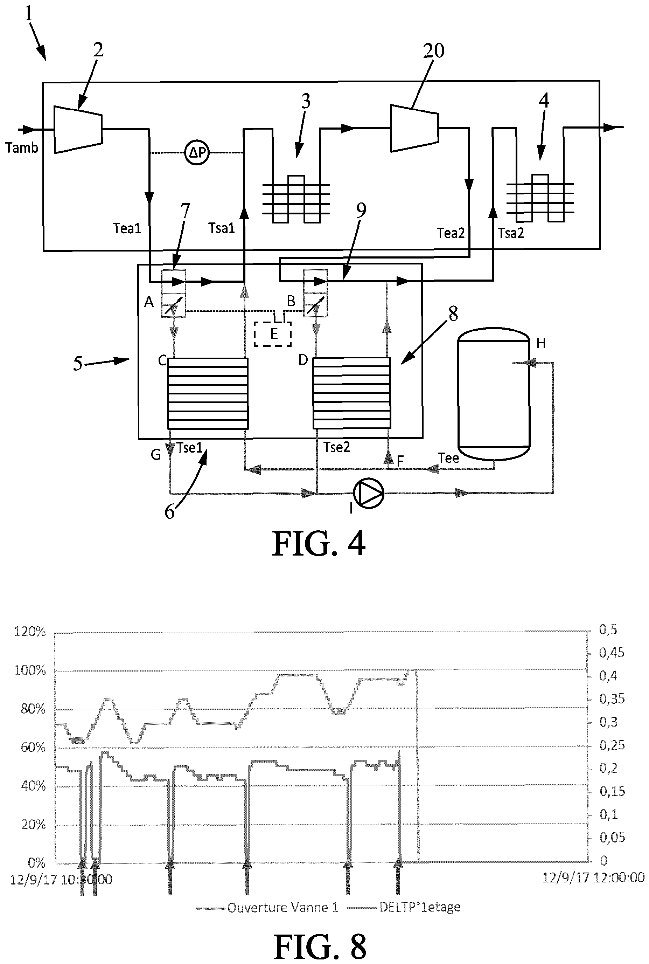

- La figure 4 est un schéma représentant l'intégration d'un dispositif de récupération thermique selon l'invention à un compresseur d'air ATLAS ZT 90kW, avec la présence de capteurs de températures pour le suivi de la température de l'air ambiant, de l'air d'inter-étage (avant et après récupération par le premier système d'échangeur), et de l'air du second étage, (avant et après récupération par le second système d'échangeur), ainsi que le suivi de la température de l'eau dans une boucle d'eau chauffée directement par les systèmes d'échangeur du dispositif de récupération, prélevant la chaleur respectivement à l'inter-étage et au seconde étage,

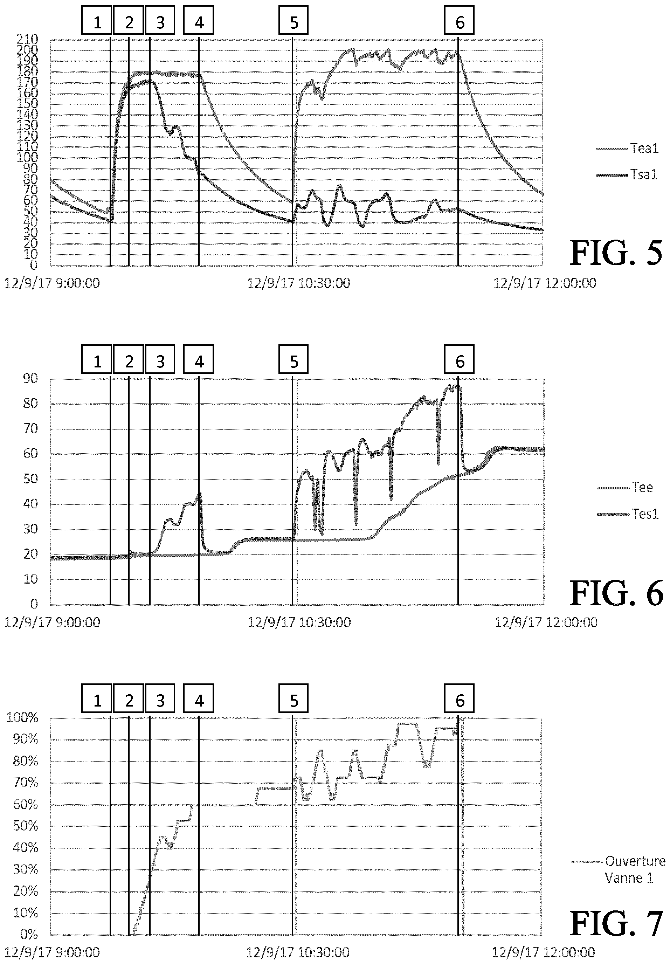

- La figure 5 est un graphique illustrant l'évolution des températures d'air Teal et Tsal en fonction du temps lors d'un test de 3 h (de 9h00 à 12h00),
- La figure 6 est un graphique illustrant l'évolution des températures d'eau Tee et Tes1 en fonction du temps lors du test de 3 h (de 9h00 à 12h00),
- La figure 7 est un graphique illustrant le taux d'ouverture en fonction du temps lors du test de 3 h (9h00 à 12h00),
- La figure 8 est un graphique illustrant en ordonnée l'évolution du delta de pression (courbe basse) au cours du temps lors de la deuxième moitié du test (de 10h30 à 12h00) en fonction du taux d'ouverture de la vanne progressive (courbe haute) de la récupération à l'inter-étage,

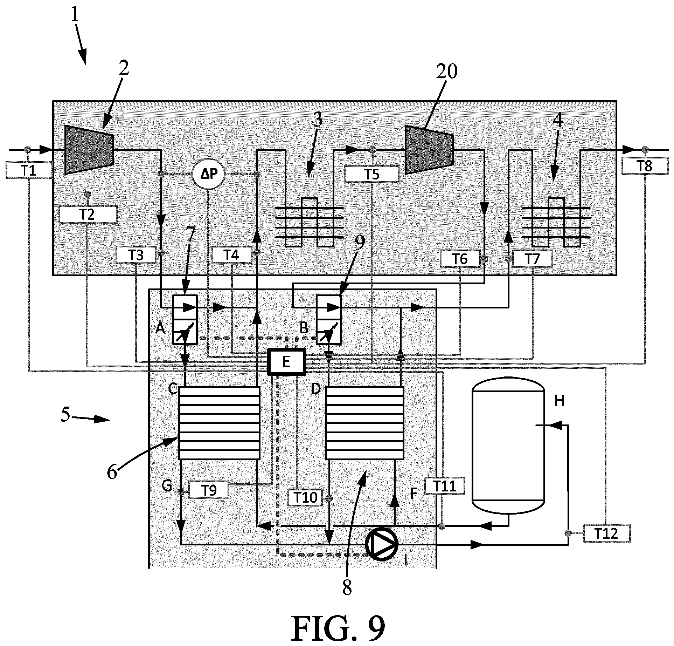

- La figure 9 est un schéma illustrant une possibilité de régulation par un automate repéré E des vannes progressives du dispositif de récupération, assurant une montée progressive de la température (sans choc thermique) au système d'échangeur du dispositif de récupération, mais encore une possibilité de régulation du circulateur repéré I acheminant le fluide tel que l'eau aux secondaires des systèmes d'échangeurs,

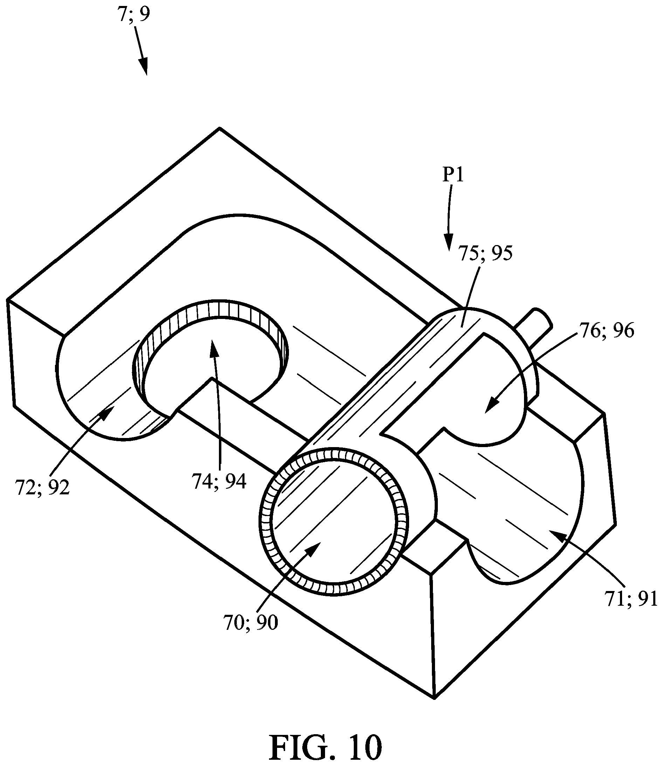

- La figure 10 est une vue de coupe d'une structure possible de vanne progressive trois voies à section de passage constante, à section de passage constante quel que soit l'état intermédiaire de la vanne progressive entre ladite première position P1 et ladite seconde position P2.

### Généralités :

Aussi, l'invention est relative à un dispositif de récupération d'énergie thermique destiné à être relié à un compresseur d'air non-lubrifié assurant la compression mécanique de l'air convenant pour la récupération des calories générées par la compression de l'air.

Ledit compresseur d'air comprend ainsi :
- Un premier étage de compression mécanique 2 configuré pour comprimer un air, en particulier un air ambiant, produisant un air comprimé chaud d'inter-étage Act,
- un premier système de refroidissement 3 convenant pour refroidir l'air comprimé chaud d'inter-étage Act, produisant un air comprimé froid d'inter-étage Aft,
- un deuxième étage de compression mécanique 20 configuré pour comprimer l'air froid de l'inter-étage, produisant un air comprimé chaud du deuxième étage,
- un deuxième système de refroidissement 4 convenant pour refroidir l'air comprimé chaud du deuxième étage Acd, produisant un air comprimé froid du deuxième étage Afd.

Le premier étage de compression mécanique 2 et le deuxième étage de compression mécanique 20 peuvent être chacun constitués par un compresseur à vis sèches.

Le premier système de refroidissement 3 et le deuxième système de refroidissement 4 peuvent être des échangeurs air/air, ou encore des échangeurs air/liquide, le liquide de refroidissement pouvant être de l'eau.

Le premier étage de compression mécanique 2 est configuré pour comprimer l'air en particulier l'air ambiant à une pression P1 supérieure à la pression atmosphérique, et le second étage de compression mécanique 20 est configuré pour comprimer l'air refroidi du premier étage à une pression P2, supérieure à P1.

A l'issue de la première compression, l'air chaud d'inter-étage Act atteint typiquement des températures comprises entre 180°C et 210°C, avant d'être refroidi par le premier système de refroidissement 3, produit l'air froid refroidi d'inter-étage Aft.

L'air froid d'inter-étage doit présenter des caractéristiques de température, de pression et de débit déterminé de sorte que le second étage de compression mécanique 20 puisse atteindre les performances de compression souhaitée, à savoir une pression typiquement comprise entre 6 bars et 15 bars pour l'air comprimé à l'issue de la deuxième compression mécanique.

Selon l'invention, ledit dispositif 5 de récupération d'énergie thermique comprend avantageusement des moyens pour la récupération des calories contenues dans l'air comprimé chaud d'inter-étage Act et/ou des moyens pour la récupération des calories contenues dans l'air comprimé chaud Acd du deuxième étage.

Les moyens pour la récupération des calories contenues dans l'air comprimé chaud d'inter-étage Act comprennent :
- un système d'échangeur air/fluide 6, comprenant un primaire destiné à être traversé par l'air comprimé chaud d'inter-étage Act présentant une entrée 61 de primaire et une sortie 62 de primaire, et un secondaire destiné à être traversé par un fluide tel qu'un liquide, par exemple de l'eau, de la vapeur ou un gaz tel que l'air,
- une vanne 7 progressive, trois voies à section de passage constante, y compris une entrée de vanne 70 et deux sorties de vanne 71,72, ladite entrée de vanne 70 étant destinée à être connectée à la sortie du premier étage de compression 2 recevant l'air chaud comprimé d'inter-étage Act, et dans lequel ladite première sortie de vanne 71 est connectée à l'entrée 61 du primaire dudit système d'échangeur air/fluide 6 , ladite sortie 62 du primaire étant destinée à être connectée à l'entrée du premier système de refroidissement 3, et la seconde sortie 72 de vanne étant destinée à être connectée à l'entrée du premier système de refroidissement 3.

Selon l'invention, cette vanne 7 progressive peut passer d'une première position P1, d'une part, pour laquelle l'air en entrée de vanne est destiné à être acheminé totalement vers la première sortie de vanne 71 vers une deuxième position P2, d'autre part, pour laquelle l'air en entrée de vanne est destiné à être acheminé totalement vers la deuxième sortie de vanne 72, et dans lequel la vanne 7 progressive est à section de passage constante quel que soit l'état intermédiaire de la vanne progressive entre ladite première position P1 et ladite seconde position P2.

Autrement dit, et lorsque la vanne est dans une position intermédiaire entre la première position P1, et la deuxième position P2, l'air en entrée 70 de la vanne est réparti entre la première sortie de vanne 71 et la seconde sortie de vanne 72, et selon une répartition proportionnelle à la position de l'obturateur de la vanne.

Comme illustré, aux figures 2a à 2c, cette vanne progressive 7, à section de passage constante est avantageuse en qu'elle engendre des pertes de charges globalement constantes, et quel que soit la position de l'obturateur entre la première position P1 et la deuxième position P2.

De manière notable et grâce à une perte de charge relativement constante quel que soit l'état de la vanne 7, on s'assure ainsi que les propriétés de l'air froid compressé (en termes de pression et de débit) restent dans une plage compatible au fonctionnement du deuxième étage de compression mécanique 20.

Les moyens pour la récupération des calories contenues dans l'air comprimé chaud d'inter-étage peuvent encore comprendre un capteur de température C6 ciblant la température T9 du fluide ayant traversé le secondaire du système d'échangeur air/fluide 6, et une électronique de commande et de régulation E configurée pour la mise en oeuvre d'une régulation proportionnelle, connectée au capteur de température et configurée de manière à délivrer un signal de commande proportionnelle de la vanne progressive 7 entre la première position P1 et la deuxième position P2 en fonction du signal de température du capteur de température C6, et éventuellement d'autres capteurs ciblant les températures T3 et T4
- T3. Température mesurée de l'air en aval du premier étage de compression 2, et en amont du premier système d'échangeur 20,
- T4. Température mesurée de l'air d'inter-étage en sortie du premier système d'échangeur 6, en amont du premier système de refroidissement 3.

Lesdits moyens pour la récupération des calories contenues dans l'air comprimé chaud du second étage Acd comprennent :
- un système d'échangeur air/fluide 8, comprenant un primaire destiné à être traversé par l'air comprimé chaud du deuxième étage Acd présentant une entrée de primaire 81 et une sortie de primaire 82, et un secondaire destiné à être traversé par un fluide tel qu'un liquide, par exemple de l'eau, de la vapeur ou un gaz tel que l'air,
- une vanne progressive 9, trois voies à section de passage constante, y compris une entrée de vanne 90 et deux sorties de vanne 91, ladite entrée de vanne 90 étant destinée être connectée à la sortie du deuxième étage de compression 20 recevant l'air chaud comprimé du second étage Acd, et dans lequel ladite première sortie de vanne 91 est connectée à l'entrée 81 du primaire dudit système d'échangeur air/fluide 8, ladite sortie du primaire 82 étant destinée être connectée à l'entrée du deuxième système de refroidissement 4, et la seconde sortie de vanne 92 étant destinée à être connectée à l'entrée du deuxième système de refroidissement 4.

La vanne progressive 9 peut passer d'une première position P1, d'une part, pour laquelle l'air en entrée de vanne 90 est acheminé totalement vers la première sortie de vanne 91, vers une deuxième position P2, d'autre part, pour laquelle l'air en entrée de vanne 90 est acheminé totalement vers la deuxième sortie de vanne 92.

La vanne progressive 9 est à section de passage constante quel que soit l'état intermédiaire de la vanne progressive 9 entre ladite première position P1 et ladite deuxième position P2.

Autrement dit, et lorsque la vanne est dans une position intermédiaire entre la première position P1, et la deuxième position P2, l'air en entrée 90 de la vanne est réparti entre la première sortie de vanne 91 et la seconde sortie de vanne 92, et selon une répartition proportionnelle à la position de l'obturateur de la vanne.

Comme illustré, aux figures 3a à 3c, cette vanne progressive 9, à section de passage constante est avantageuse en qu'elle engendre des pertes de charges globalement constantes, et quel que soit la position de l'obturateur entre la première position P1 et la deuxième position P2.

Lesdits moyens pour la récupération des calories contenues dans l'air comprimé chaud du second étage comprennent un capteur de température C8 ciblant la température T10 du fluide ayant traversé le secondaire du système d'échangeur air/liquide 8, et une électronique de commande et de régulation E, configurée pour la mise en oeuvre d'une régulation proportionnelle, connectée au capteur de température et configurée de manière à délivrer un signal de commande proportionnelle de la vanne progressive 9 entre la première position P1 et la deuxième position P2 en fonction du signal de température du capteur de température C8, et éventuellement d'autres capteurs ciblant les températures T6 et T7.
- T6. Température mesurée de l'air à la sortie du second étage de compression mécanique 20, en amont du deuxième système d'échangeur
- T7. Température mesurée de l'air en amont du deuxième système d'échangeur 8, en amont du deuxième système de refroidissement.

Selon un mode de réalisation, ledit dispositif 5 de récupération d'énergie thermique comprend uniquement les moyens pour la récupération des calories contenues dans l'air comprimé chaud d'inter-étage Act, ou encore uniquement les moyens pour la récupération des calories contenues dans l'air comprimé chaud Acd du deuxième étage.

Selon un autre mode de réalisation, ledit dispositif 5 de récupération d'énergie thermique comprend non seulement les moyens pour la récupération des calories contenues dans l'air comprimé chaud d'inter-étage Act, mais encore les moyens pour la récupération des calories contenues dans l'air comprimé chaud Acd du deuxième étage.

L'invention concerne encore un compresseur d'air 1 assurant la compression mécanique de l'air sans huile, comprenant :
- le premier étage de compression mécanique 2 configuré pour comprimer un air en particulier un air ambiant produisant un air comprimé chaud d'inter-étage Act,
- le premier système de refroidissement 3 convenant pour refroidir l'air comprimé chaud d'inter-étage Act, produisant un air comprimé froid d'inter-étage Aft,
- le deuxième étage de compression mécanique 20 configuré pour comprimer l'air froid de l'inter-étage, produisant un air comprimé chaud du deuxième étage,
- le deuxième système de refroidissement 4 convenant pour refroidir l'air comprimé chaud du deuxième étage Acd, produisant un air comprimé froid du deuxième étage Afd.

Selon l'invention, ledit compresseur d'air comprend ledit dispositif 5 de récupération thermique de calories contenues dans l'air comprimé chaud d'inter-étage et/ou des calories contenues dans l'air comprimé chaud du deuxième étage conforme à l'invention.

Lesdits moyens pour la récupération des calories contenues dans l'air comprimé chaud d'inter-étage comprennent :
- le système d'échangeur air/fluide 6, comprenant le primaire destiné à être traversé par l'air comprimé chaud d'inter-étage Act présentant ladite entrée 61 de primaire et la sortie 62 de primaire, et le secondaire destiné à être traversé par un liquide tel que de l'eau,
- la vanne 7 progressive, trois voies à section de passage constante, y compris ladite entrée de vanne 70 et les deux sorties de vanne 71,72, ladite entrée de vanne 70 étant connectée à la sortie du premier étage de compression 2 recevant l'air chaud comprimé d'inter-étage Act.

Ladite première sortie de vanne 71 est connectée à l'entrée 61 du primaire dudit système d'échangeur air/fluide 6, ladite sortie 62 du primaire étant connectée à l'entrée du premier système de refroidissement 3, et la seconde sortie 72 de vanne étant connectée à l'entrée du premier système de refroidissement 3.

La vanne 7 progressive peut passer de la première position P1, d'une part, pour laquelle l'air en entrée de vanne est acheminé totalement vers la première sortie de vanne 71 de sorte que l'air soit acheminé au primaire du système d'échangeur air/ fluide 6 avant de traverser le premier système de refroidissement 3, vers la deuxième position P2, d'autre part, pour laquelle l'air en entrée de vanne est acheminé totalement vers la deuxième sortie de vanne 72 de sorte que l'air soit acheminé au premier système de refroidissement 3 sans traverser le système d'échangeur air/fluide 6.

On remarquera que l'invention permet d'atteindre un haut niveau de sécurité par comparaison à l'état de la technique constituée par le document CN104005959A (ou encore JP2017150496), et même dans le cas d'un blocage de la vanne 7 (que ce soit un défaut de la vanne, voire même un défaut de régulation), quelle que soit sa position de blocage (à savoir dans la première position P1, la deuxième position P2, ou encore un état intermédiaire quelconque entre P1 et P2) en ce que la totalité de l'air entrant dans la vanne 7 et ressortant par les sorties de vanne 71 et 72 est de toute manière conduit dans le premier système de refroidissement 3 qui permet à lui seul de le refroidir en ledit air comprimé froid d'inter-étage. On s'assure que l'air chaud comprimé Act d'inter-étage est toujours refroidi en l'air froid comprimé d'inter-étage Aft, et dans une plage de température, de pression et de débit compatible avec le deuxième étage de compression mécanique 20. On préserve ainsi l'intégrité du deuxième étage de compression mécanique 20 qui est susceptible d'être altéré si l'air comprimé en entrée présente des caractéristiques sortant des plages admissibles.

Les moyens pour la récupération des calories contenues dans l'air comprimé chaud d'inter-étage peuvent encore comprendre le capteur de température C6 ciblant la température du fluide ayant traversé le secondaire du système d'échangeur air/fluide 6, et une électronique de commande et de régulation configurée pour la mise en oeuvre d'une régulation proportionnelle, connectée au capteur de température et configurée de manière à délivrer un signal de commande proportionnelle de la vanne progressive 7 entre la première position P1 et la deuxième position P2 en fonction du signal de température du capteur de température C6.

En fonction des besoins de récupération d'énergie, la position de l'organe obturateur de la vanne 7 est régulée progressivement. On choisit de préférence une régulation du type PID avec une rapidité maîtrisée (pas trop rapide), ce qui permet d'éviter une commande de la vanne en tout ou rien (à savoir une commande de la vanne soit dans la première position P1 ou soit dans la deuxième position P2) ou trop rapide qui serait favorable à des chocs thermiques à l'origine de la détérioration de l'échangeur 6. Cette régulation vise au contraire à obtenir une montée progressive en température du système d'échangeur thermique 6.

De préférence, la régulation en température imposera des temps de montée en température du système d'échangeur 5 typiquement supérieure à 1 minute, de préférence supérieure à 5 minutes, tel que par exemple 20 minutes lorsque la vanne progressive 7 est basculée de la position P2 vers la position P1.

Par exemple la régulation est configurée pour imposer une vitesse d'augmentation de la température ciblée par le capteur de température C6 inférieure à 60°C par minute de préférence inférieure à 30°C par minute, et de préférence inférieure à 10°C par minute lorsque la vanne est régulée de la deuxième position P2 vers la première position P1, et de préférence supérieur à 5° par minute.

Lesdits moyens pour la récupération des calories contenues dans l'air comprimé chaud du second étage comprennent :
- le système d'échangeur air/fluide 8, comprenant le primaire destiné à être traversé par l'air comprimé du deuxième étage comprenant ladite entrée de primaire 81 et la sortie de primaire 82, et le secondaire destiné à être traversé par un fluide (liquide tel que de l'eau, vapeur ou gaz tel que l'air),
- la vanne progressive 9, trois voies à section de passage constante, y compris une entrée de vanne 90 et deux sorties de vanne 91, ladite entrée de vanne 90 étant connectée à la sortie du deuxième étage de compression 20 recevant l'air chaud comprimé du second étage Acd, et dans lequel ladite première sortie de vanne 91 est connectée à l'entrée 81 du primaire dudit système d'échangeur air/fluide 8, ladite sortie du primaire 82 étant connectée à l'entrée du deuxième système de refroidissement 4, et la seconde sortie de vanne 92 étant connectée à l'entrée du deuxième système de refroidissement 4.

La vanne progressive 9 peut passer de la première position P1, d'une part, pour laquelle l'air en entrée de vanne 90 est acheminé totalement vers la première sortie de vanne 91 de sorte que l'air soit acheminé au système d'échangeur air/fluide 8 avant de traverser le deuxième système de refroidissement 4, vers une deuxième position P2, d'autre part, pour laquelle l'air en entrée de vanne 90 est acheminé totalement vers la deuxième sortie de vanne 92 de sorte que l'air soit acheminé au deuxième système de refroidissement 4 sans traverser le système d'échangeur air/fluide 8, et dans lequel la vanne 9 est à section de passage constante quel que soit l'état intermédiaire de la vanne progressive entre ladite première position P1 et ladite deuxième position P2.

On remarquera encore que l'invention permet d'atteindre un haut niveau de sécurité par comparaison à l'état de la technique constituée par le document CN104005959A, et même dans le cas d'un blocage de la vanne 9 (que ce soit un défaut de la vanne, voire même un défaut de régulation), quelle que soit sa position de blocage (à savoir dans la première position P1, la deuxième position P2, ou encore un état intermédiaire quelconque entre P1 et P2) en ce que la totalité de l'air entrant dans la vanne 9 et ressortant par les sorties de vanne 71 et 72 est de toute manière conduit dans le deuxième système de refroidissement 4 qui permet à lui seul de le refroidir en ledit air comprimé froid du second étage Afd. On garantit que l'air comprimé produit par le compresseur à double étage de compression mécanique soit toujours dans une plage de température acceptable, c'est à dire suffisamment refroidi.

Les moyens pour la récupération des calories contenues dans l'air comprimé chaud du second étage peuvent encore comprendre le capteur de température C8 ciblant la température du fluide ayant traversé le secondaire du système d'échangeur air/fluide 8, et une électronique de commande et de régulation configurée pour la mise en oeuvre d'une régulation proportionnelle, connectée au capteur de température et configurée de manière à délivrer un signal de commande proportionnelle de la vanne progressive 9 entre la première position P1 et la deuxième position P2 en fonction du signal de température du capteur de température C8.

En fonction des besoins de récupération d'énergie, la position de l'organe obturateur de la vanne 9 est régulée progressivement. On choisit de préférence une régulation du type PID avec une rapidité maîtrisée (pas trop rapide), ce qui permet d'éviter une commande de la vanne en tout ou rien (à savoir une commande de la vanne soit dans la première position P1 ou soit dans la deuxième position P2) ou trop rapide qui serait favorable à des chocs thermiques à l'origine de la détérioration de l'échangeur 8. Cette régulation vise au contraire à obtenir une montée progressive en température du système d'échangeur thermique 8.

De préférence, la régulation en température imposera des temps de montée en température du système d'échangeur thermique 8 typiquement supérieure à 1 minute, de préférence supérieure à 5 minutes, tel que par exemple 20 minutes lorsque la vanne progressive 9 est basculée de la position P2 vers la position P1.

La régulation est par exemple configurée pour imposer une vitesse d'augmentation de la température ciblée par le capteur de température C8 inférieure à 60° C par minute, et de préférence inférieure à 30° C par minute, et encore de préférence inférieur à 10°C lorsque la vanne progressive 9 est basculée de la deuxième position P2 vers la première position P2, et de préférence supérieure à 5°C par minute.

Les avantages de la présente invention sont nombreux et significatifs:
- la récupération directe (non par l'intermédiaire d'une boucle d'eau comme dans cette antériorité CN 202520561) des calories contenues dans l'air comprimé chaud de l'inter-étage Act et/ou de l'air comprimé chaud du second étage Acd permet de chauffer un fluide et par exemple de l'eau à la température ambiante à des températures supérieures à 50°C, en particulier supérieures ou égales à 60°C, par exemple 65°C pour le chauffage de l'eau chaude sanitaire,
- l'utilisation de vanne progressive à section de passage constante permet de limiter les variations des pertes de charge et quelle que soit la position de vanne, et de manière à maintenir l'air comprimé froid d'inter-étage dans une plage (de pression et de débit) compatible avec le fonctionnement optimum du second étage de compression mécanique,
- la ou les vannes à section de passage constante, et le fait que la totalité de l'air comprimé chaud d'inter-étage (resp. du second étage) soit acheminé, quelle que soit la position de vanne au premier système de refroidissement (resp. au deuxième système de refroidissement) permet d'obtenir une grande sécurité de fonctionnement du compresseur à air qui reste opérationnel, même en cas de blocage de la vanne progressive, et quelle que soit la position de blocage de la vanne 7 ou 9,
- le ou les vannes progressives 7, 9 autorisent la mise en oeuvre d'une régulation du type PID pour laquelle la ou les vannes sont régulées progressivement afin d'éviter les chocs thermiques au(x) échangeurs, par une montée en température progressive du ou de chacun des échangeurs 5,8

Un dispositif de purge 10 peut être prévu entre la sortie 62 du primaire du système d'échangeur air/fluide 6 et le premier système de refroidissement 3 : il permettra d'évacuer l'eau condensée par le refroidissement de l'air chaud d'inter-étage Act dans le primaire du système d'échangeur air/fluide 6 : ce condensat n'atteint pas le deuxième étage de compression mécanique 20.

Un dispositif de purge 11 peut être prévu entre la sortie 82 du primaire du système d'échangeur air/fluide 8 et le deuxième système de refroidissement 4 : il permettra d'évacuer l'eau condensée par le refroidissement de l'air chaud du second étage dans le primaire du système d'échangeur air/fluide 8.

Le dispositif de récupération d'énergie thermique est encore avantageux en ce qu'il peut être monté rapidement et aisément à un compresseur d'air existant conforme à l'état de la technique dépourvu de dispositif de récupération thermique.

Aussi, l'invention concerne encore un procédé d'obtention d'un compresseur d'air selon l'invention à partir d'un compresseur existant dépourvu de dispositif de récupération d'énergie thermique de calories contenues dans l'air comprimé chaud d'inter-étage et/ou des calories contenues dans l'air comprimé chaud du deuxième étage, ledit compresseur existant comprenant :
- un premier étage de compression mécanique 2 configuré pour comprimer un air, produisant un air comprimé chaud d'inter-étage Act,
- un premier système de refroidissement 3 convenant pour refroidir l'air comprimé chaud d'inter-étage Act, produisant un air comprimé froid d'inter-étage Aft,
- un deuxième étage de compression mécanique 20 configuré pour comprimer l'air froid de l'inter-étage, produisant un air comprimé chaud du deuxième étage,
- un deuxième système de refroidissement 4 convenant pour refroidir l'air comprimé chaud du deuxième étage Ac, produisant un air comprimé froid du deuxième étage Afd.

Selon le procédé conforme à l'invention on ajoute au compresseur existant un dispositif 5 de récupération d'énergie thermique de calories contenues dans l'air comprimé chaud d'inter-étage et/ou des calories contenues dans l'air comprimé chaud du deuxième étage conforme à l'invention, par le montage desdits moyens pour la récupération des calories contenues dans l'air comprimé chaud d'inter-étage et/ou des moyens pour la récupération des calories contenues dans l'air comprimé chaud du second étage.

Lesdits moyens pour la récupération des calories contenues dans l'air comprimé chaud d'inter-étage, comprennent :
- le système d'échangeur air/fluide 6, comprenant le primaire destiné à être traversé par l'air comprimé chaud d'inter-étage Act présentant ladite entrée 61 de primaire et une sortie 62 de primaire, et le secondaire destiné à être traversé par un fluide tel que de l'eau,
- la vanne 7 progressive, trois voies à section de passage constante, y compris une entrée de vanne 70 et deux sorties de vanne 71,72, ladite première sortie de vanne 71 étant connectée à l'entrée 61 du primaire dudit système d'échangeur air/fluide 6,
et procédé dans lequel :
- on connecte ladite entrée de vanne 70 à la sortie du premier étage de compression 2 recevant l'air chaud comprimé d'inter-étage Act,
- on connecte ladite sortie 62 du primaire à l'entrée du premier système de refroidissement 3, et la seconde sortie 72 de vanne étant connectée à l'entrée du premier système de refroidissement 3.

Lesdits moyens pour la récupération des calories contenues dans l'air comprimé chaud du second étage comprenant :
- le système d'échangeur air/liquide 8, comprenant le primaire destiné à être traversé par l'air comprimé du deuxième étage comprenant ladite entrée de primaire 81 et ladite sortie de primaire 82, et le secondaire destiné à être traversé par un fluide tel que de l'eau,
- ladite vanne progressive 9, trois voies à section de passage constante, y compris une entrée de vanne 90 et deux sorties de vanne 91, ladite première sortie de vanne 91 étant connectée à l'entrée 81 du primaire dudit système d'échangeur air/fluide 8,
et procédé dans lequel :
- on connecte ladite entrée de vanne 90 à la sortie du deuxième étage de compression 20 recevant l'air chaud comprimé du second étage Acd,
- on connecte ladite sortie du primaire 82 à l'entrée du deuxième système de refroidissement 4, et la seconde sortie de vanne 92 étant connectée à l'entrée du deuxième système de refroidissement 4.

### Rapport d'essai :

La figure 4 illustre schématiquement un compresseur du commerce (ATLAS ZT 90 kw de la Société ATLAS COPCO) sur lequel est ajouté un dispositif de récupération 5 selon le procédé de l'invention, comprenant un (premier) système d'échangeur repéré 6 raccordé tel que précédemment décrit pour récupérer la chaleur de l'air comprimé de l'inter-étage, et un (second) système d'échangeur repéré 8, raccordé tel que précédemment décrit pour récupérer la chaleur de l'air comprimé du second étage.

Tel qu'illustré, les secondaires des deux systèmes d'échangeur 6, 8 sont raccordés en parallèles et utilisés pour chauffer l'eau d'un réservoir (de 1500 litres) circulant en continue sous l'action d'une pompe I. Des vannes (non illustrés) peuvent être prévues pour répartir le rapport le débit d'eau traversant les deux systèmes d'échangeurs.

L'objectif de ce rapport d'essai est de suivre les performances du dispositif 5 qui comporte deux vannes progressives 7, 9, tel que précédemment décrite et d'un automate de régulation E pilotant des deux vannes 7,9.

Cet essai a pour objet d'étudier les paramètres de fonctionnement du dispositif de récupération selon l'invention avec divers capteurs mesurant :
Les températures d'air :
   - Tamb : Température de l'air ambiant, à savoir la température de l'air aspiré par le compresseur,
   - Teal : Température mesurée à l'entrée du premier système d'échangeur 6 : l'air provient du premier étage de compression,
   - Tsal : Température mesurée à la sortie du premier système d'échangeur 6 : l'air est envoyée au système de refroidissement repéré 3 de l'inter- étage,
   - Tea2 : Température mesurée à l'entrée du deuxième système d'échangeur 8 : l'air provient du deuxième étage de compression,
   - Tsa2 : Température mesurée à la sortie du deuxième système d'échangeur 8 : l'air est envoyée au deuxième système de refroidissement 4

Les températures d'eau :
- Tee : Température d'eau à l'entrée du premier système d'échangeur 6,
- Tsel : Température d'eau à la sortie du premier système d'échangeur 6,
- Tse2 : Température d'eau à la sortie du deuxième système d'échangeur 8.

La différence de pression Δp entre l'aval et l'amont de l'ensemble vanne progressive et premier système d'échangeur 6.

L'essai a été réalisé sur une période de 3h (9h à 12h) comme indiqué sur les graphes des figures 5 à 7.

### Maîtrise de la température

Le compresseur est démarré à l'index **1,** mais pas le dispositif de récupération, les vannes progressives 7, 9 étant dans leur position P2 pour laquelle les systèmes d'échangeur sont court-circuités : on remarque du graphique de la figure 5 que Teal et Tsal, la température de l'air amont et aval augmentent très rapidement, la chaleur n'étant pas récupérée (entre ces deux points de mesure).

Le dispositif de récupération 5 est démarré à l'index **2,** à savoir que les vannes progressives 7, 8 s'ouvrent progressivement de leur position P2 vers P1 : on constate un léger décrochage de la température Tsal par rapport à Tea1, l'énergie prélevée par le système d'échangeur 6 étant transférée à l'eau : la température Tsel augmente légèrement, évitant tout choc thermique.

A l'index **3,** l'ouverture de la vanne progressive (P2 vers P1) franchit le pallier des 30%, le débit d'air chaud passant dans le système d'échangeur 6 étant désormais important pour observer une augmentation significative de Tse1, et dans le même temps un nette diminution de Tsal.

A l'index **4,** le compresseur s'arrête, ce qui a pour conséquence que toutes les températures chutent brutalement.

A l'index **5,** le compresseur redémarre et la récupération avec. Jusqu'à l'index **6,** on observe plusieurs séquences où le compresseur s'arrête pour des courtes périodes avant de se mettre en marche à nouveau, ce qui est un fonctionnement normal lorsqu'il atteint sa consigne de pression. Les réglages des vannes 7 et 9 sont modifiés pour atteindre des températures d'eau Tsel de 50°C, 60°C, 70°C, 80°C et 85°C.

Cet essai confirme que l'invention permet d'éviter tout choc thermique aux systèmes d'échangeur repérés 6 et 8, tout en permettant d'atteindre un transfert de chaleur important, y compris des températures élevées.

### Maîtrise du Δp

Outre la progressivité de la régulation permettant d'éviter les chocs thermiques, l'un des enjeux de la faisabilité de l'invention est la perte de charge (sur le circuit d'air inter-étage) induite par le dispositif de récupération 5. Ces pertes de charge sont engendrées à l'inter-étage par la tuyauterie, le système d'échangeur 6, et la vanne progressive 7.

Les pertes de charge engendrées par le système d'échangeur 6 et la tuyauterie sont impondérables. La vanne progressive 7 à section de passage constant (quel que soit son pourcentage d'ouverture) permet de limiter les pertes de charge par rapport aux vannes proportionnelles connues de l'état de l'art.

La perte de charge est contrôlée par la mesure Δp : cette mesure est effectuée entre deux points, en amont et en aval du dispositif sur l'inter-étage : pour cette analyse nous nous intéressons en particulier à la deuxième période de l'essai (10h30 à 12h) et selon la figure 8. Ainsi et à la figure 8 on distingue nettement les arrêts du compresseur qui se traduisent par des chutes du Δp. Ces événements sont repérés sur le graphique par des flèches. Ensuite on constate à la reprise en charge que le Δp monte brutalement avant de redescendre : ce phénomène s'explique par la montée en pression du circuit : à basse pression, la vitesse de l'air est plus importante, les pertes de charge plus marquées. Ces deux phénomènes sont à isoler des pertes de charge générées par l'équipement.

Les données fournies par le fabriquant de l'échangeur du système 6 donne 0,1 bar de perte de charge. La moyenne des points (hors marche à vide) donne une Δp de 0,19 bar, ce qui veut dire que le circuit (y compris la vanne 7) génère une perte de charge de 0,09 bar.

Enfin on constate de manière notable que la Δp ne varie que très peu entre les différents états d'ouvertures de la vanne progressive 7. On obtient d'après la mesure entre 0,02 à 0,04 bar de différence entre l'état de fermeture (P2) et l'état d'ouverture (P1).

Ces essais confirment la pertinence du choix de la vanne progressive qui ne génère pas de perte de charge significative dans le circuit (quel que soit son degré d'ouverture) garantissant que les caractéristiques de l'air envoyé au second étage sont conformes au bon fonctionnement du deuxième étage de compression.

### Régulation

Le dispositif de récupération selon l'invention peut être capable de réagir vis-à-vis de nombreux paramètres liés au fonctionnement du compresseur, mais aussi de paramètres extérieurs.

Sur le schéma de la figure 9, nous retrouvons le compresseur d'air 1, le dispositif de récupération thermique 5 avec son premier système d'échangeur 6 pour la récupération de la chaleur de l'inter-étage, et son deuxième système d'échangeur 8 pour la récupération de la chaleur du second étage.

La chaleur récupérée est utilisée pour chauffer de l'eau prélevée d'un réservoir. Un circulateur (i.e une pompe) repéré I permet de prélever de l'eau du réservoir et de l'acheminer au secondaire du (second) système d'échangeur 8, et en parallèle au secondaire (premier) du système d'échangeur 6, l'eau chauffée étant recyclée au réservoir.

Une électronique de commande et de régulation E, présentent pour entrées divers signaux provenant de capteurs, tels que des capteurs de températures, voire même un capteur de différentiel de pression, et en particulier les paramètres mesurés suivants :
Température en particulier d'air :
   - T1. Température de l'air ambiant (aspiré par le compresseur),
   - T2. Température dans le compresseur,
   - T3. Température mesurée de l'air en aval du premier étage de compression, et en amont du premier système d'échangeur,
   - T4. Température mesurée de l'air d'inter-étage en sortie du premier système d'échangeur 6, en amont du premier système de refroidissement 3,
   - T5. Température mesurée de l'air en aval du premier système de refroidissement, en amont du deuxième étage de compression mécanique 20,
   - T6. Température mesurée de l'air à la sortie du second étage de compression mécanique 20, en amont du deuxième système d'échangeur
   - T7. Température mesurée de l'air en amont du deuxième système d'échangeur 8, en amont du deuxième système de refroidissement,
   - T8. Température mesurée de l'air à sortie du compresseur, en aval du deuxième système de refroidissement,

Température d'eaux :
- T9 : température d'eau en sortie du premier système d'échangeur,
- T10 : température d'eau en sortie du second système d'échangeur,
- T11 : température d'eau en entrée du dispositif de récupération,
- T12 : température de l'eau recyclée au réservoir.

Δp. Différentiel de pression sur le circuit d'air inter-étage de part et d'autre de l'ensemble premier système d'échangeur 6 et vanne progressive 7.

Les capteurs des températures T9, T10, T11 et T12 permettent le pilotage de la pompe du circulateur I ; ces capteurs sont également utilisés par l'électronique E pour décider de l'atteinte (ou non) des consignes de températures. C'est en premier lieu la température du fluide, en l'espèce l'eau qui est le principal objectif de la récupération d'énergie.

Les capteurs des températures T1, T2, T3, T6 et T8 sont utilisés par l'électronique E pour surveiller le fonctionnement du compresseur et réguler les vannes progressives 7 et 9 : ces vannes propositionnelles régulent la répartition des débits entre le système d'échangeur (6 ou 8) et le court-circuit. La régulation par l'électronique E permet une montée en température progressive des systèmes d'échangeur 6 ou 8, sans choc thermique.

Enfin les températures T4, T5, T7, ainsi que le différentiel de pression Δp permettent de surveiller le bon fonctionnement du dispositif de récupération thermique 5.

### Vanne(s) progressive(s) :

L'invention met en oeuvre une ou deux vannes progressives 7 et/ou 9, trois voies à section de passage constante (motorisées) qui sont notables en ce qu'elles permettent (chacune) une répartition précise de débit entre les deux sorties en fonction d'un signal de commande proportionnelle délivré par l'électronique de commande et de régulation E.

Cette vanne 7 ou 9 est encore notable en ce qu'elle est à section de passage constante quel que soit l'état intermédiaire de la vanne progressive entre ces positions extrêmes, à savoir ladite première position P1 et ladite deuxième position P2.

La figure 10 est une vue de coupe illustrant une possibilité de réalisation de cette vanne.

La vanne 7 (ou 9) comprend un corps de vanne 73 (ou 93) avec une tubulure interne qui définit :
- la première sortie 71 (ou 91) de la vanne destinée à être reliée au système d'échangeur 6 (ou 8),
- la deuxième sortie 72 (ou 92) de la vanne destinée à être reliée au système de refroidissement 3 (ou 4), en court-circuitant le système d'échangeur 6 (ou 8).

Eventuellement de manière optionnelle, le corps de vanne peut comprendre une entrée 74, 94 pour le fluide ayant traversé le système d'échangeur, le fluide traversant cette entrée 74, 94 circulant directement jusqu'à la deuxième sortie 72, 92 sans être bloqué par l'obturateur mobile 75, 95.

L'obturateur mobile 75 (ou 95) est un corps creux tubulaire, monté pivotant dans le corps de vanne, en particulier cylindrique.

L'obturateur creux 95 forme l'entrée 70, 90 de la vanne, le fluide (air) en entrée circulant dans le creux de l'obturateur 75 ; 95 avant de sortir par une ouverture de paroi de l'obturateur.

Dans la position P1 illustrée à la figure 10, l'air circulant dans l'obturateur 75 ; 95 est forcé vers la première sortie 71 (ou 91), la paroi de l'obturateur 75 ; 95 empêchant le fluide de circuler vers la deuxième sortie 72 (ou 92).

Le pivotement de l'obturateur suivant sa course permet d'atteindre la deuxième position P2 de vanne pour laquelle la totalité de l'air en entrée est conduite vers la deuxième sortie 72 ;92.

L'obturateur 75, 95 peut encore être commandé en rotation suivant plusieurs intermédiaires entre les deux positions extrêmes, et afin de répartir le débit entre les deux sorties 71 et 72 (ou 91 et 92) suivant un pourcentage maitrisé.

L'invention peut encore comprendre en soi une telle vanne. Aussi et de manière générale l'invention a encore pour objet une vanne progressive 7 ; 9 comprenant un corps de vanne 73 ; 93 avec une tubulure interne qui définit :
- une première sortie 71; 91 de la vanne,
- une deuxième sortie 72 ; 92 de vanne
- un obturateur mobile 75 ; 95 comprenant un corps creux tubulaire, monté pivotant dans le corps de vanne 73 ; 93, formant l'entrée 70; 90 de la vanne, le fluide en entrée circulant dans le creux de l'obturateur 75 ; 95 avant de sortir par une ouverture de paroi (76 ; 96) de l'obturateur mobile 75, 95 dans la tubulure du corps de vanne 73 ; 93,
la vanne étant configurée de sorte que le pivotement de l'obturateur 75 ; 95 suivant deux positions extrêmes permet d'atteindre respectivement une première position P1 dans laquelle le fluide est acheminé entièrement vers la première sortie 71 ;91 et une deuxième position P2 de vanne dans laquelle le fluide est acheminé entièrement vers la deuxième sortie 72, 92, la vanne étant à section de passage constante quel que soit l'état intermédiaire de la vanne progressive entre ladite première position P1 et ladite deuxième position P2.

Naturellement d'autres modes de réalisation auraient pu être envisagés sans pour autant sortir du cadre de l'invention défini par les revendications ci-après.

### NOMENCLATURE

1. Compresseur d'air,
2. Premier étage de compression mécanique,
20. Deuxième étage de compression mécanique,
3. Premier système de refroidissement,
4. Deuxième système de refroidissement,
5. Dispositif de récupération d'énergie thermique de calories contenu dans l'air comprimé chaud d'inter-étage et/ou des calories contenu dans l'air comprimé chaud du deuxième étage,

### Récupération des calories de l'inter-étage

6. Système d'échangeur air/fluide (récupération des calories de l'air comprimé chaud d'inter-étage),
61,62. Entrée et sortie du primaire du système d'échangeur,
7. Vanne progressive connectée (récupération des calories de l'air comprimé chaud d'inter-étage),
70, 71, 72. Entrée, première et deuxième sortie de la vanne progressive,
73. Corps de vanne,
74. Entrée (facultative),
75. Obturateur pivotant,
76. Ouverture de paroi obturateur
Act. Air comprimé chaud d'inter-étage,
Acf. Air comprimé froid d'inter-étage,
C6. Capteur de température ciblant la température en aval du secondaire de l'échangeur 6,
10. Dispositif de purge des condensats

### Récupération des calories du second étage

8. Système d'échangeur air/fluide (récupération des calories de l'air comprimé chaud d'inter-étage),
81,82. Entrée et sortie du primaire du système d'échangeur,
9. Vanne progressive connectée (récupération des calories de l'air comprimé chaud d'inter-étage),
90, 91, 92. Entrée, première et deuxième sortie de la vanne progressive
93, Corps de vanne,
94. Entrée (facultative),
95. Obturateur pivotant,
96. Ouverture de paroi obturateur
10. 11. Dispositif de purge des condensats,
Acd. Air comprimé chaud du deuxième étage
Acf. Air comprimé froid du deuxième étage,
C8. Capteur de température ciblant la température en aval du secondaire de l'échangeur 8,
P1. Première position de vanne pour laquelle l'air est acheminé totalement au système d'échangeur, avant de circuler dans le premier (ou deuxième) système de refroidissement
P2. Deuxième position de vanne pour laquelle l'air est acheminé totalement au premier (ou deuxième) système de refroidissement, sans traverser le premier (ou deuxième) système de refroidissement.

### Régulation

### E. Electronique de commande et de régulation

### Température en particulier d'air :

- T1. Température de l'air ambiant (aspiré par le compresseur),
- T2. Température dans le compresseur,
- T3. Température mesurée de l'air en aval du premier étage de compression, et en amont du premier système d'échangeur,
- T4. Température mesurée de l'air d'inter-étage en sortie du premier système d'échangeur 6 3, en amont du premier système de refroidissement 3,
- T5. Température mesurée de l'air en aval du premier système de refroidissement, en amont du deuxième étage de compression mécanique 20,
- T6. Température mesurée de l'air à la sortie du second étage de compression mécanique 20, en amont du deuxième système d'échangeur T7. Température mesurée de l'air en amont du deuxième système d'échangeur 8, en amont du deuxième système de refroidissement,
- T8. Température mesurée de l'air à sortie du compresseur, en aval du deuxième système de refroidissement,

### Température d'eaux :

- T9 : température d'eau en sortie du premier système d'échangeur,
- T10 : température d'eau en sortie du second système d'échangeur,
- T11 : température d'eau en entrée du dispositif de récupération,
- T12 température de l'eau recyclée au réservoir.

Δp. Différentiel de pression sur le circuit d'air inter-étage de part et d'autre de l'ensemble premier système d'échangeur 6 et vanne progressive 7.

## Revendications

1. Dispositif de récupération thermique destiné à être relié à un compresseur d'air non lubrifié assurant la compression mécanique de l'air, convenant pour la récupération des calories générées par la compression de l'air, ledit compresseur d'air comprenant :
- un premier étage de compression mécanique (2) configuré pour comprimer un air, produisant un air comprimé chaud d'inter-étage (Act),
- un premier système de refroidissement (3) convenant pour refroidir l'air comprimé chaud d'inter-étage (Act), produisant un air comprimé froid d'inter-étage (Aft),
- un deuxième étage de compression mécanique (20) configuré pour comprimer l'air froid de l'inter-étage, produisant un air comprimé chaud du deuxième étage
- un deuxième système de refroidissement (4) convenant pour refroidir l'air comprimé chaud du deuxième étage (Acd), produisant un air comprimé froid du deuxième étage (Afd), ledit dispositif (5) de récupération thermique comprenant des moyens pour la récupération des calories contenues dans l'air comprimé chaud d'inter-étage et/ou des moyens pour la récupération des calories contenues dans l'air comprimé chaud du deuxième étage,
lesdits moyens pour la récupération des calories contenues dans l'air comprimé chaud d'inter-étage comprenant :
- un système d'échangeur air/fluide (6), comprenant un primaire destiné à être traversé par l'air comprimé chaud d'inter-étage (Act) présentant une entrée (61) de primaire et une sortie (62) de primaire, et un secondaire destiné à être traversé par un fluide tel qu'un liquide, en particulier de l'eau, de la vapeur, ou encore un gaz
- une vanne (7) progressive, trois voies à section de passage constante, y compris une entrée de vanne (70) et deux sorties de vanne (71,72), ladite entrée de vanne (70) étant destinée à être connectée à la sortie du premier étage de compression (2) recevant l'air chaud comprimé d'inter-étage (Act),
et dans lequel ladite première sortie de vanne (71) est connectée à l'entrée (61) du primaire dudit système d'échangeur air/fluide (6), ladite sortie (62) du primaire étant destinée à être connectée à l'entrée du premier système de refroidissement (3), et la seconde sortie (72) de vanne étant destinée à être connectée à l'entrée du premier système de refroidissement (6)
et dans lequel la vanne (7) progressive pouvant passer d'une première position (P1), d'une part, pour laquelle l'air en entrée de vanne est destiné à être acheminé totalement vers la première sortie de vanne (71) vers une deuxième position (P2), d'autre part, pour laquelle l'air en entrée de vanne est destiné à être acheminé totalement vers la deuxième sortie de vanne (72), et dans lequel la vanne (7) progressive est à section de passage constante quel que soit l'état intermédiaire de la vanne progressive entre ladite première position (P1) et ladite seconde position (P2),
lesdits moyens pour la récupération des calories contenues dans l'air comprimé chaud du second étage comprenant:
- un système d'échangeur air/fluide (8), comprenant un primaire destiné à être traversé par l'air comprimé du deuxième étage présentant une entrée de primaire (81) et une sortie de primaire (82), et un secondaire destiné à être traversé par un fluide tel qu'un liquide, en particulier de l'eau, de la vapeur, ou encore un gaz
- une vanne progressive (9), trois voies à section de passage constante, y compris une entrée de vanne (90) et deux sorties de vanne (91), ladite entrée de vanne (90) étant destinée être connectée à la sortie du deuxième étage de compression (20) recevant l'air chaud comprimé du second étage (Acd),
et dans lequel ladite première sortie de vanne (91) est connectée à l'entrée (81) du primaire dudit système d'échangeur air/fluide (8), ladite sortie du primaire (82) étant destinée à être connectée à l'entrée du deuxième système de refroidissement (4), et la seconde sortie de vanne (92) étant destinée à être connectée à l'entrée du deuxième système de refroidissement (4)
et dans lequel la vanne progressive (9) pouvant passer d'une première position (P1), d'une part, pour laquelle l'air en entrée de vanne (90) est acheminé totalement vers la première sortie de vanne (91), vers une deuxième position (P2), d'autre part, pour laquelle l'air en entrée de vanne (90) est acheminé totalement vers la deuxième sortie de vanne (92), et dans lequel la vanne (9) est à section de passage constante quel que soit l'état intermédiaire de la vanne progressive entre ladite première position (P1) et ladite deuxième position (P2).

2. Dispositif selon la revendication 1 dans lequel les moyens pour la récupération des calories contenues dans l'air comprimé chaud d'inter-étage comprennent un capteur de température (C6) ciblant la température (T9) du fluide ayant traversé le secondaire du système d'échangeur air/fluide (6), et une électronique de commande et de régulation (E) configurée pour la mise en oeuvre d'une régulation proportionnelle, connectée au capteur de température et configurée de manière à délivrer un signal de commande proportionnelle de la vanne progressive (7) entre la première position (P1) et la deuxième position (P2) en fonction du signal de température du capteur de température (C6).

3. Dispositif selon la revendication 2, dans lequel l'électronique de commande est configurée pour mettre en oeuvre une régulation PID au cours de laquelle la vanne progressive (7) est régulée progressivement, la régulation étant configurée pour obtenir une montée progressive en température du système d'échangeur air/fluide (6)

4. Dispositif selon la revendication 3, dans lequel la régulation est configurée pour imposer une vitesse d'augmentation de la température ciblée par le capteur de température (C6) inférieure à 30°C par minute, et de préférence inférieure à 10°C par minute lorsque la vanne est régulée de la deuxième position (P2) vers la première position (P1).

5. Dispositif selon l'une des revendications 1 à 4, dans lequel lesdits moyens pour la récupération des calories contenues dans l'air comprimé chaud du second étage comprennent un capteur de température (C8) ciblant la température (T10) du fluide ayant traversé le secondaire du système d'échangeur air/liquide (8), et une électronique de commande et de régulation (E), configurée pour la mise en oeuvre d'une régulation proportionnelle, connectée au capteur de température et configurée de manière à délivrer un signal de commande proportionnelle de la vanne progressive (9) entre la première position (P1) et la deuxième position (P2) en fonction du signal de température du capteur de température (C8).

6. Dispositif selon la revendication 5, dans lequel l'électronique de commande est configurée pour mettre en oeuvre une régulation PID au cours de laquelle la vanne progressive (9) est régulée progressivement, la régulation étant configurée pour obtenir une montée progressive en température du système d'échangeur air/fluide (8).

7. Dispositif selon la revendication 6, dans lequel la régulation est configurée pour imposer une vitesse d'augmentation de la température ciblée par le capteur de température (C8) inférieure à 30° par minute, et de préférence inférieure à 10° par minute.

8. Dispositif selon l'une des revendications 1 à 7, dans lequel la vanne progressive (7 ; 9) comprend un corps de vanne (73 ; 93) avec une tubulure interne qui définit :
- la première sortie (71; 91) de la vanne reliée au système d'échangeur (6; 8),
- la deuxième sortie (72 ; 92) de vanne destinée à être reliée au système de refroidissement (3 ; 4), en court-circuitant le système d'échangeur (6 ; 8),
- un obturateur mobile (75 ; 95) comprenant un corps creux tubulaire, monté pivotant dans le corps de vanne (73 ; 93), formant l'entrée (70; 90) de la vanne, le fluide en entrée circulant dans le creux de l'obturateur (75 ; 95) avant de sortir par une ouverture de paroi (76 ; 96) de l'obturateur mobile (75, 95) dans la tubulure du corps de vanne (73 ; 93),
la vanne étant configurée de sorte que le pivotement de l'obturateur (75 ; 95) suivant deux positions extrêmes permet d'atteindre respectivement la première position P1 et la deuxième position P2 de vanne.

9. Compresseur d'air (1) non lubrifié assurant la compression mécanique de l'air, comprenant :
- un premier étage de compression mécanique (2) configuré pour comprimer un air, produisant un air comprimé chaud d'inter-étage (Act),
- un premier système de refroidissement (3) convenant pour refroidir l'air comprimé chaud d'inter-étage (Act), produisant un air comprimé froid d'inter-étage (Aft),
- un deuxième étage de compression mécanique (20) configuré pour comprimer l'air froid de l'inter-étage, produisant un air comprimé chaud du deuxième étage
- un deuxième système de refroidissement (4) convenant pour refroidir l'air comprimé chaud du deuxième étage (Acd), produisant un air comprimé froid du deuxième étage (Afd),
**caractérisé en ce que** ledit compresseur d'air comprend ledit dispositif (5) de récupération d'énergie thermique selon l'une des revendications 1 à 8, convenant pour la récupération des calories contenues dans l'air comprimé chaud d'inter-étage et/ou des calories contenues dans l'air comprimé chaud du deuxième étage,
lesdits moyens pour la récupération des calories contenues dans l'air comprimé chaud d'inter-étage comprenant :
- le système d'échangeur air/fluide (6), comprenant le primaire destiné à être traversé par l'air comprimé chaud d'inter-étage (Act) présentant ladite entrée (61) de primaire et la sortie (62) de primaire, et le secondaire destiné à être traversé par le fluide,
- la vanne (7) progressive, trois voies à section de passage constante, y compris ladite entrée de vanne (70) et les deux sorties de vanne (71,72), ladite entrée de vanne (70) étant connectée à la sortie du premier étage de compression (2) recevant l'air chaud comprimé d'inter-étage (Act),
et dans lequel ladite première sortie de vanne (71) est connectée à l'entrée (61) du primaire dudit système d'échangeur air/fluide (6), ladite sortie (62) du primaire étant connectée à l'entrée du premier système de refroidissement (3), et la seconde sortie (72) de vanne étant connectée à l'entrée du premier système de refroidissement (3)
et dans lequel la vanne (7) progressive pouvant passer de la première position (P1), d'une part, pour laquelle l'air en entrée de vanne est acheminé totalement vers la première sortie de vanne (71) de sorte que l'air soit acheminé au primaire du système d'échangeur air/liquide (6) avant de traverser le premier système de refroidissement (3), vers la deuxième position (P2), d'autre part, pour laquelle l'air en entrée de vanne est acheminé totalement vers la deuxième sortie de vanne (72) de sorte que l'air soit acheminé au premier système de refroidissement (3) sans traverser le système d'échangeur air/liquide (6),
lesdits moyens pour la récupération des calories contenues dans l'air comprimé chaud du second étage comprenant :
- le système d'échangeur air/fluide (8), comprenant le primaire destiné à être traversé par l'air comprimé du deuxième étage comprenant ladite entrée de primaire (81) et la sortie de primaire (82), et le secondaire destiné à être traversé par un liquide tel que de l'eau,
- la vanne progressive (9), trois voies à section de passage constante, y compris une entrée de vanne (90) et deux sorties de vanne (91), ladite entrée de vanne (90) étant connectée à la sortie du deuxième étage de compression (20) recevant l'air chaud comprimé du second étage (Acd),
et dans lequel ladite première sortie de vanne (91) est connectée à l'entrée (81) du primaire dudit système d'échangeur air/fluide (8), ladite sortie du primaire (82) étant connectée à l'entrée du deuxième système de refroidissement (4), et la seconde sortie de vanne (92) étant connectée à l'entrée du deuxième système de refroidissement (4)
et dans lequel la vanne progressive (9) pouvant passer la première position (P1), d'une part, pour laquelle l'air en entrée de vanne (90) est acheminé totalement vers la première sortie de vanne (91) de sorte que l'air soit acheminé au système d'échangeur air/liquide (8) avant de traverser le deuxième système de refroidissement (4), vers la deuxième position (P2), d'autre part, pour laquelle l'air en entrée de vanne (90) est acheminé totalement vers la deuxième sortie de vanne (92) de sorte que l'air soit acheminé au deuxième système de refroidissement (4) sans traverser le système d'échangeur air/fluide (8), et dans lequel la vanne (9) est à section de passage constante quel que soit l'état intermédiaire de la vanne progressive entre ladite première position (P1) et ladite deuxième position (P2).

10. Compresseur d'air (1) selon la revendication 9 dans lequel ledit compresseur d'air comprend lesdits moyens pour la récupération des calories contenues dans l'air comprimé chaud d'inter-étage.

11. Compresseur d'air selon la revendication 9 comprenant lesdits moyens pour la récupération des calories contenues dans l'air comprimé chaud du second étage.

12. Compresseur d'air selon la revendication 9, comprenant lesdits moyens pour la récupération des calories contenues dans l'air comprimé chaud d'inter-étage et lesdits moyens pour la récupération des calories contenues dans l'air comprimé chaud du second étage.

13. Compresseur d'air selon la revendication 12 dans lequel le secondaire du système d'échangeur air/fluide (6) des moyens pour la récupération des calories contenues dans l'air comprimé chaud d'inter-étage et le secondaire du système d'échangeur air/fluide (8) des moyens pour la récupération des calories contenues dans l'air comprimé chaud du second étage sont traversés par un même fluide à chauffer.

14. Procédé d'obtention d'un compresseur selon l'une quelconque des revendications 9 à 13 à partir d'un compresseur existant dépourvu de dispositif de récupération thermique de calories contenues dans l'air comprimé chaud d'inter-étage et/ou des calories contenues dans l'air comprimé chaud du deuxième étage, ledit compresseur existant comprenant :
- un premier étage de compression mécanique (2) configuré pour comprimer un air, produisant un air comprimé chaud d'inter-étage (Act),
- un premier système de refroidissement (3) convenant pour refroidir l'air comprimé chaud d'inter-étage (Act), produisant un air comprimé froid d'inter-étage (Aft),
- un deuxième étage de compression mécanique (20) configuré pour comprimer l'air froid de l'inter-étage, produisant un air comprimé chaud du deuxième étage
- un deuxième système de refroidissement (4) convenant pour refroidir l'air comprimé chaud du deuxième étage (Acd), produisant un air comprimé froid du deuxième étage (Afd),
procédé dans lequel on ajoute au compresseur existant un dispositif (5) de récupération thermique de calories contenues dans l'air comprimé chaud d'inter-étage et/ou des calories contenues dans l'air comprimé chaud du deuxième étage selon l'une des revendications 1 à 8, par le montage desdits moyens pour la récupération des calories contenues dans l'air comprimé chaud d'inter-étage et/ou des moyens pour la récupération des calories contenues dans l'air comprimé chaud du second étage,
lesdits moyens pour la récupération des calories contenues dans l'air comprimé chaud d'inter-étage, comprenant :
- le système d'échangeur air/fluide (6), comprenant le primaire destiné à être traversé par l'air comprimé chaud d'inter-étage (Act) présentant ladite entrée (61) de primaire et une sortie (62) de primaire, et le secondaire destiné à être traversé par un fluide tel que de l'eau,
- la vanne (7) progressive, trois voies à section de passage constante, y compris une entrée de vanne (70) et deux sorties de vanne (71,72), ladite première sortie de vanne (71) étant connectée à l'entrée (61) du primaire dudit système d'échangeur air/fluide (6),
et procédé dans lequel :
- on connecte ladite entrée de vanne (70) à la sortie du premier étage de compression (2) recevant l'air chaud comprimé d'inter-étage (Act),
- on connecte ladite sortie (62) du primaire à l'entrée du premier système de refroidissement (3), la seconde sortie (72) de vanne étant connectée à l'entrée du premier système de refroidissement (3),
et dans lequel lesdits moyens pour la récupération des calories contenues dans l'air comprimé chaud du second étage comprenant :
- le système d'échangeur air/fluide (8), comprenant le primaire destiné à être traversé par l'air comprimé du deuxième étage présentant ladite entrée de primaire (81) et ladite sortie de primaire (82), et le secondaire destiné à être traversé par un fluide tel que de l'eau,
- ladite vanne progressive (9), trois voies à section de passage constante, y compris une entrée de vanne (90) et deux sorties de vanne (91), ladite première sortie de vanne (91) étant connectée à l'entrée (81) du primaire dudit système d'échangeur air/fluide (8)
et procédé dans lequel :
- on connecte ladite entrée de vanne (90) à la sortie du deuxième étage de compression (20) recevant l'air chaud comprimé du second étage (Acd),
- on connecte ladite sortie du primaire (82) à l'entrée du deuxième système de refroidissement (4), et la seconde sortie de vanne (92) étant connectée à l'entrée du deuxième système de refroidissement (4).

15. Utilisation du dispositif de récupération thermique (5) du compresseur d'air selon l'une des revendications 9 à 13 pour chauffer l'eau d'un réseau de chauffage et/ou pour chauffer l'eau du réseau sanitaire.

16. Vanne progressive (7 ; 9) comprenant un corps de vanne (73 ; 93) avec une tubulure interne qui définit :
- une première sortie (71; 91) de la vanne,
- une deuxième sortie (72 ; 92) de vanne
- un obturateur mobile (75 ; 95) comprenant un corps creux tubulaire, monté pivotant dans le corps de vanne (73 ; 93), formant l'entrée (70; 90) de la vanne, le fluide en entrée circulant dans le creux de l'obturateur (75 ; 95) avant de sortir par une ouverture de paroi (76 ; 96) de l'obturateur mobile (75, 95) dans la tubulure du corps de vanne (73 ; 93),
la vanne étant configurée de sorte que le pivotement de l'obturateur (75 ; 95) suivant deux positions extrêmes permet d'atteindre respectivement une première position P1 dans laquelle le fluide est acheminé entièrement vers la première sortie (71 ;91) et une deuxième position P2 de vanne dans laquelle le fluide est acheminé entièrement vers la deuxième sortie (72 ; 92), la vanne étant à section de passage constante quel que soit l'état intermédiaire de la vanne progressive entre ladite première position (P1) et ladite deuxième position (P2).
